Europäisches Patentamt

European Patent Office

Office européen des brevets

(19)

(11) Publication number: **0 131 639**

**B1**

(12) # EUROPEAN PATENT SPECIFICATION

(45) Date of publication of patent specification: **10.06.87**

(51) Int. Cl.⁴: **C 08 L 69/00,** C 08 K 3/22, C 08 K 5/09

(21) Application number: **83106861.4**

(22) Date of filing: **13.07.83**

(54) **Method for promoting and enhancing the optical transparency of a polycarbonate resin prepared by the transesterification of a diaryl carbonate and a dihydric phenol.**

(43) Date of publication of application:
**23.01.85 Bulletin 85/04**

(45) Publication of the grant of the patent:
**10.06.87 Bulletin 87/24**

(84) Designated Contracting States:
**DE FR GB IT NL**

(56) References cited:
**BE-A- 570 938**
**DE-A-2 309 450**
**GB-A-2 019 422**
**US-A-3 965 064**

(73) Proprietor: **GENERAL ELECTRIC COMPANY**
**1 River Road**
**Schenectady New York 12305 (US)**

(72) Inventor: **Liu, Ping Yuan**
**124 Tanager Court**
**Naperville Illinois 60565 (US)**
Inventor: **Ko, Allen Wai-Yee**
**259 Housatonic Street**
**Lenox Massachusetts 01240 (US)**

(74) Representative: **Catherine, Alain**
**General Electric - Deutschland Munich Patent**
**Operation Frauenstrasse 32**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 131 639 B1

## Description

The present invention provides for a novel method for affecting the optical clarity of polycarbonate resin which has been prepared via the transesterification of a diaryl carbonate and a dihydric phenol, which involves adding to the polycarbonate resin 4 to 16 ppm based on the total weight of the composition of a lithium compound nucleating agent selected from lithium hydroxide and lithium stearate.

It is known that various aromatic polyaryl esters or polyarylates may be prepared by transesterification and polycondensation of mixtures of diaryl esters of aromatic carboxylic acids, together with diaryl carbonate, if desired, and dihydric phenols, and that polycarbonates may be prepared by transesterification of a diaryl carbonate with a dihydric phenol. In this application, polyarylates are considered to be polycarbonates in which all or part of the carbonic acid residues are replaced by aryl dicarboxylic acid residues, preferably isophthalic and/or terephthalic acid residues.

A transesterified polycarbonate resin, employable for purposes of this invention, is suitably prepared by blending, e.g., diphenyl carbonate and bisphenol-A as a melt in the presence of an appropriate catalyst. The molecular weight of the resulting resin is preferably in the range between 8,000 to 100,000, preferably 10,000 to 80,000, and exhibits an intrinsic viscosity between 0.4 to 0.7 dl/g.

Conventionally, in carrying out the transesterification process, the reaction components are passed through a number of stages involving melting the reaction components, reacting the components, pre-polymerizing the reaction product and, finally, polymerizing the effluent from the pre-polymerization stage in a final polymerization stage.

Heretofore, in processes employing the aforementioned series of steps, thin film evaporators have been employed only in the final polymerization stage.

One disadvantage with the various processes conventionally employed in the art lies in the fact that the speed of the pre-polymerization step is limited by mass transfer constraints brought about by the formation of byproducts of the reaction, which ultimately necessitates a minimum residence time under the specific reaction conditions in order to effect the degree of product formation desired.

A new method for the transesterification of a diaryl carbonate and a dihydric phenol which allows for shorter residence time in the pre-polymerization stage of the reaction process, and thus produces an enhanced yield of reaction product in less time, comprises using a series of equipment including a melter, a reactor, a pre-polymerization reactor and then more polymerization reaction vessels.

The utilization of non-ferrous reaction vessel components, such as, nickel, titanium, chromium metals or the like for all contact surfaces, in such a system such as for pipings, reactor, and/or recovering vessels, etc., clad or lined with such materials or with glass, provides a superior system for producing polycarbonate resin via the transesterification reaction, since the resultant product will be free from undesirable color formation.

US Patent 4,383,092 discloses such a reaction system and may be utilized to advantage in preparing the resin to be utilized in the crystallization process of the present invention.

Said patent also discloses that carrying out the reaction to produce a polycarbonate resin via the transesterification of a diaryl carbonate and a dihydric phenol, allowing the components to reach equilibrium in an inert atmosphere in the melt-reaction step prior to introducing such partially reacted components to a series of ester-interchange reaction vessels, which are operated under vacuum, wherein the excess phenol produced is removed via distillation and the entrained diphenyl carbonate is refluxed to the ester-interchange reaction vessel, and carrying out the reaction in a totally non-ferrous material environment allows for the production of a product in higher yield and shorter residence time than has heretofore been possible.

In carrying out the transesterification of diphenyl carbonate and bisphenol-A to produce a bisphenol-A polycarbonate, with the removal of phenol, various lithium salts are known to have utility as catalysts for the reaction. Typically, lithium salts such as the various lithium halides and lithium hydroxides have been employed for this purpose. It has been found, however, that the effectiveness of the lithium salts which are conventionally employed for carrying out the transesterification of bisphenol-A and diphenyl carbonate is limited by the fact that such salts are only partially soluble in the reaction medium.

The polycarbonate resins produced via the transesterification of a diaryl carbonate and a dihydric phenol find utility in the production of various films and similar materials.

The documents US—A—3 965 064, GB—A—2 019 422 and DE—A—2 309 450 teach adding other lithium compound nucleating agents in a higher amount to improve the crystallinity of polycarbonate resins.

The present invention provides for a beneficial method for promoting and enhancing the optical clarity of polycarbonate resins produced via the transesterification of a diaryl carbonate and a dihydric phenol which allows for the production of sheet and film material having improved characteristics over those produced using prior art methods. It is based on the addition of lithium compounds in very small amounts to transesterified polycarbonates.

In accordance with the present invention, there is disclosed a method for promoting and enhancing the optical clarity of polycarbonate resins prepared by the transesterification of a diaryl carbonate and a dihydric phenol, said method comprising adding to the polycarbonate resin 4 to 16 ppm based on the total weight of the composition of a lithium compound nucleating agent selected from lithium hydroxide and lithium stearate.

It has been found in the processing of a polycarbonate resin produced via the transesterification of a diaryl carbonate and a dihydric phenol that the addition of such minor but effective amounts of lithium hydroxide or lithium stearate effectively leads to the formation of film and sheet materials having improved overall characteristics in comparison with similar materials produced using prior art techniques.

Various methods for preparing polycarbonate resinous films and sheets are known in the art and require no further elaboration. Up until now partially crystallized polycarbonate films or sheets have been produced by retarding the rate of solvent removal or by treating the clear amorphous film with swelling agents after casting. In either process, the procedure is time consuming and difficulty is encountered in controlling the degree of crystallinity.

In contrast, by employing the lithium compound nucleating agents in the method of this invention, transparent and higher strength transesterified polycarbonate film can be readily and efficiently produced by casting, extruding or compressing the pellets.

In carrying out the method of the present invention for promoting and enhancing the optical clarity of a polycarbonate resin prepared by the transesterification of a diaryl carbonate and a dihydric phenol, it has been found that incorporating 4 to 16 ppm based on the total weight of the composition of a lithium hydroxide or lithium stearate to said polycarbonate resin results in polycarbonate resins that are highly effective in preparing polycarbonate film or sheet materials having improved physical properties over those prepared in accordance with prior art methods.

Preferably, diphenyl carbonate and bisphenol-A are used in the transesterification reaction, although it is understood that the present invention contemplates polycarbonate resins prepared from other dihydric phenols and diaryl carbonates well-known in this art.

The lithium compound nucleating agent employed in the herein disclosed method is selected from lithium hydroxide and lithium stearate.

The nucleating agent described above is added in amounts of from 4 to 16 ppm, preferably 10 to 14 ppm, based on the total weight of composition. Particularly lithium stearate is added in an amount from 6 to 12 ppm based on the total weight of the composition.

## Examples 1—4

Various examples of bisphenol-A polycarbonate films were prepared from resins produced via the transesterification of diphenyl carbonate and bisphenol-A, both with and without the addition of small amounts of the lithium compound nucleating agents of the present invention.

Product compositions, optical and physical properties for the resultant materials are set forth in the attached Table 1.

TABLE 1
Example of Nucleated Transesterified Polycarbonate

| Example | Control | 1 | 2 | 3 | 4 |
|---|---|---|---|---|---|
| Nucleating Agent | None | LiOH | LiOH | $LiC_{18}H_{35}O_2$ | $LiC_{18}H_{35}O_2$ |
| Contents, ppm | | 5.0 | 10.0 | 5.0 | 10.0 |
| Crystallinity, % | NDA | NDA | NDA | 0.62 | 1.28 |
| Optical Properties, $\frac{1}{8}$ in. (0.3175 cm) chip | | | | | |
| Transmission, % | | | | | |
| Unaged | 86.3 | 86.9 | 86.3 | 86.7 | 87.4 |
| 90°C 8 hr. aged | 86.3 | 86.6 | 85.6 | 86.9 | 87.3 |
| Haziness, % | | | | | |
| Unaged | 4.7 | 1.4 | 1.4 | 0.8 | 0.4 |
| 90°C 8 hr. aged | 4.7 | 1.1 | 1.5 | 1.1 | 1.0 |
| Yellowness Index (YI) | | | | | |
| Unaged | 8.1 | 8.9 | 9.5 | 8.4 | 8.0 |
| 90°C 8 hr. aged | 8.1 | 8.9 | 9.5 | 8.4 | 8.0 |
| Notched Izod N.m/cm* (ft-lb/inch) $\frac{1}{8}$ in. (0.3175 cm) bar | | | | | |
| Unaged | $8.17^{100}$ $(15.3^{100})$ | $8.17^{100}$ $(15.3^{100})$ | $7.85^{100}$ $(14.7^{100})$ | $7.85^{100}$ $(14.7^{100})$ | $7.85^{100}$ $(14.7^{100})$ |
| 90°C 8 hr. aged | $6.725^{80}$ $(12.6^{80})$ | $6.62^{80}$ $(12.4^{80})$ | $6.35^{80}$ $(11.9^{80})$ | $5.28^{60}$ $(9.9^{60})$ | $7.85^{100}$ $(14.7^{100})$ |

Notes:
NDA — non detectable
* superscript represents the percentage of ductile failure for example, $12.4^{80}$ means the sample has 12.4 ft-lb/in impact strength, four of five evaluated sampled failed in ductile mode, one brittle.

The results shown in Table 1 illustrate that incorporating 5 and 10 ppm of lithium hydroxide, and 5 and 10 ppm of lithium stearate, significantly reduces the haziness, even for samples aged at 90°C for 8 hours. Furthermore, the addition of lithium stearate at 10 ppm improves transparency by reducing yellowness index and also improves thermal stability as shown by the 100% ductility retention for the aged samples. Finally, the excellent results on haziness obtained with the simple method of the present invention can only be obtained conventionally by difficult and expensive steps like retarding solvent removal or swelling the films.

**Claims**

1. A method for promoting and enhancing the optical transparency of a polycarbonate resin prepared by the transesterification of a diarylcarbonate and a dihydric phenol comprising adding to said polycarbonate resin a lithium compound nucleating agent characterized in that said lithium compound nucleating agent is selected from lithium hydroxide and lithium stearate and is added in an amount of 4 to 16 ppm based on the total weight of the composition.

2. A method according to claim 1 wherein the diaryl carbonate is diphenyl carbonate and the dihydric phenol is bisphenol A.

# 0 131 639

3. A method according to claim 1 wherein the lithium compound nucleating agent is lithium stearate in an amount from 6 to 12 ppm based on the total weight of the composition.

## Patentansprüche

1. Verfahren zur Verbesserung und Erhöhung der optischen Durchlässigkeit eines Polycarbonatharzes, erhalten durch Umesterung eines Diarylcarbonats und eines zweiwertigen Phenols unter Zugabe eines eine Lithiumverbindung enthaltenden kernbildendenden Mittels zu dem Polycarbonatharz, dadurch gekennzeichnet, daß das aus der Lithiumverbindung bestehende kernbildende Mittel ausgewählt ist aus Lithiumhydroxid und Lithiumstearat und in einer Menge von 4 bis 16 ppm, bezogen auf das Gesamtgewicht der Zusammensetzung, zugegeben wird.

2. Verfahren nach Anspruch 1, worin das Diarylcarbonat Diphenylcarbonat und das zweiwertige Phenol Bisphenol-A ist.

3. Verfahren nach Anspruch 1, worin die das kernbildende Mittel darstellende Lithiumverbindung Lithiumstearat ist, das in einer Menge von 6 bis 12 ppm, bezogen auf das Gesamtgewicht der Zusammensetzung, vorliegt.

## Revendications

1. Procédé pour favoriser et augmenter la transparence optique d'une résine de polycarbonate préparée par transestérification d'un carbonate de diaryle et d'un diphénol comprenant l'addition à la résine de polycarbonate d'un composé du lithium comme agent de nucléation, caractérisé en ce que le composé du lithium utilisé comme agent de nucléation est choisi parmi l'hydroxyde de lithium et le stéarate de lithium et en ce qu'on l'ajoute en une quantité comprise entre 4 et 16 ppm, exprimé par rapport au poids total de la composition.

2. Procédé selon la revendication 1, dans lequel le carbonate de diaryle est le carbonate de diphényle et le diphénol est le bisphénol-A.

3. Procédé selon la revendication 1, dans lequel le composé du lithium utilisé comme agent de nucléation est le stéarate de lithium, en une quantité comprise entre 6 et 12 ppm, exprimé par rapport au poids total de la composition.

5